# EUROPÄISCHE PATENTANMELDUNG

(11) **EP 0 762 029 A2**
(43) Veröffentlichungstag der Anmeldung: **12.03.1997**
(21) Anmeldenummer: 96112918.6
(22) Anmeldetag: 10.08.1996
(51) Int. Cl.: F16K 31/60, F16K 11/085

(54) **Umschaltweiche zum Anschluss an Wasserleitungen im Haushalts- und Sanitärbereich**

(30) Priorität: 16.08.1995 DE 29513138 U
(71) Anmelder: Schmidt & Lenhardt GmbH & Co. oHG, D-88316 Isny (DE)
(72) Erfinder: Janisch, Klaus, 88316 Isny (DE)
(74) Vertreter: Hübner, Hans-Joachim, Dipl.-Ing.

(57) **Zusammenfassung**

Eine Umschaltweiche weist ein Gehäuse mit einer Einlaßöffnung und zwei Auslaßöffnungen auf, die in einer zentralen Kammer münden, in der ein Ventilkolben in Form eines Drehschiebers drehbar gelagert ist. Der Drehkolben ist außerhalb des Gehäuses mit einem Betätigungshebel drehfest verbunden. Die Verbindung ist eine Steckverbindung, die mehrere Kupplungsstellungen zwischen Ventilkolben und Betätigungshebel beinhaltet.

## Beschreibung

Die Erfindung betrifft eine Umschaltweiche zum Anschluß an Wasserleitungen im Haushalts- und Pflegebereich, mit einem Gehäuse, in dem eine zylindrische Kammer ausgebildet ist, an die zwei im Umfangsabstand angeordnete Auslauföffnungen und eine, diesen Umfangsabstand wenigstens annähernd halbierende Einlaßöffnung angeschlossen sind, wobei den Öffnungen Schraubanschlüsse zugeordnet sind, und mit einem in der Kammer drehbar angeordneten Ventilkolben, der axial mit einem außerhalb des Gehäuses angeordneten Betätigungshebel drehfest verbunden ist und im Bereich der zylindrischen Kammer über Querschnittsbereiche zylindrisch ausgebildet ist.

Umschaltweichen dieser Art dienen dazu, zusätzlich zu einer Handbrause ein weiteres druckwasserbetriebenes Gerät anzuschließen, wobei wahlweise entweder die Handbrause oder dieses Gerät aktiviert werden kann. Für ältere Personen und Behinderte sind sogenannte Badelifter in Gebrauch, die druckwasserbetrieben werden. Mit Hilfe einer erfindungsgemäßen Umschaltweiche können solche Lifter ständig an der Umschaltweiche angeschlossen sein, sodaß sie bei Bedarf betriebsbereit sind.

Umschaltweichen in Form von 3-Wegeventilen sind vielfach bekannt. In vielen Badewannenarmaturen ist eine solche Umschaltweiche integriert, um vom Badewasserbetrieb auf Brausebetrieb übergehen zu können. Die Armatur hat dann einen Gewindeanschluß für den Brauseschlauch. Im Handel wird eine Vielzahl unterschiedlicher Armaturen angeboten und die Zusatzsanschlüsse für die Brause befinden sich manchmal an der Oberseite, manchmal an der Unterseite und auch bei wieder anderen Armaturen seitlich am Auslaufhahn. Das direkte Anschrauben einer Umschaltweiche ist in manchen Fällen nicht möglich, weil der Betätigungshebel gegen ein Armaturenteil stoßen würde.

Aufgabe der Erfindung ist es eine Umschaltweiche so auszubilden, daß sie in Verbindung mit wenigstens den allermeisten im Handel befindlichen Armaturen unmittelbar benutzt werden kann, ohne z.B. Adapter verwenden zu müssen.

Diese Aufgabe wird erfindungsgemäß dadurch gelöst, daß der Ventilkolben mit dem Betätigungshebel durch eine lösbare Steckverbindung gekuppelt ist, die mindestens zwei unterschiedliche Kupplungsstellungen aufweist.

Zum Lösen der Aufgabe wäre es an sich denkbar, den Betätigungshebel so klein zu machen, daß er nirgends über die Kontur des Gehäuses vorsteht, jedoch wäre dann die Handhabung insbesondere für Behinderte erheblich erschwert. Die erfindungsgemäße Lösung erlaubt dagegen die Verwendung längerer und daher leicht zu bedienender Hebel, die aber je nach Einbausituation der Umschaltweiche in mindestens zwei verschiedenen Drehstellungen mit dem Ventilkolben drehfest gekuppelt werden können, sodaß der Schwenkbereich des Betätigungshebels in einen anderen Umfangsbereich gelangt.

So liegt es im Rahmen der Erfindung an einem der den Ventilkolben und den Betätigungshebel umfassenden Teile einen Vierkantzapfen oder Sechskantzapfen vorzusehen und den anderen Teil mit einer entsprechend komplementären Ausnehmung auszustatten. Eine besonders bevorzugte Ausführungsform besteht demgegenüber aber darin, daß der eine dieser Teile im Umfangsbereich eine auf demselben Durchmesser liegende und in gleichen Abständen angeordnete Vielzahl von Axialstegen aufweist und der andere der beiden Teile entsprechende komplementäre Axialnuten besitzt. Damit wird ermöglicht, daß der Betätigungshebel feinstufig im Umfangsrichtung relativ zum Ventilkolben verstellt werden kann.

Weiterbildungen der Erfindung bestehen dann darin, daß der Betätigungshebel einen Ringbund aufweist der in einem, ggf. abgesetzten hohlzylindrischen Fortsatz der zylindrischen Kammer drehbar gelagert ist. Der Ventilkolben ist seinerseits in der zylindrischen Kammer drehbar angeordnet, sodaß an sich eine eigene Lagerung des Betätigungshebels entfallen könnte, jedoch weist der Ventilkolben an seinem Umfang vorzugsweise eine Korbdichtung auf und um diese nicht durch Kippbelastungen zu beanspruchen dient dieses weitere Merkmal der Erfindung, sodaß vom Betätigungshebel her keine Kippkräfte eingeleitet werden können.

Auch besteht noch eine Weiterbildung der Erfindung darin, daß der Ventilkolben einen Endflansch aufweist, der in einem, an die zylindrische Kammer angrenzenden zylindrischen Öffnungsabschnitt des Gehäuses eingreift. Der Ventilkolben kann also nur in einer Richtung in das Gehäuse eingesetzt werden und der Betätigungshebel ist dann durch eine von einer der Stirnseiten her betätigbaren axialen Schraube mit dem Ventilkolben verbunden, die ein koaxiales Loch des Ventilkolbens oder des Betätigungshebels durchsetzt und in ein damit fluchtendes Schraubloch des jeweils anderen dieser beiden Teile eingeschraubt ist. Der Schraubenkopf ist vorzugsweise in einer Stirnausnehmung in einem dieser beiden drehbaren Teile, vorzugsweise in dem Betätigungshebel untergebracht und kann mittels eine Abdeckkappe verborgen werden.

Anhand der Zeichnung die ein Ausführungsbeispiel darstellt, wird die Erfindung näher beschrieben.

Es zeigt:

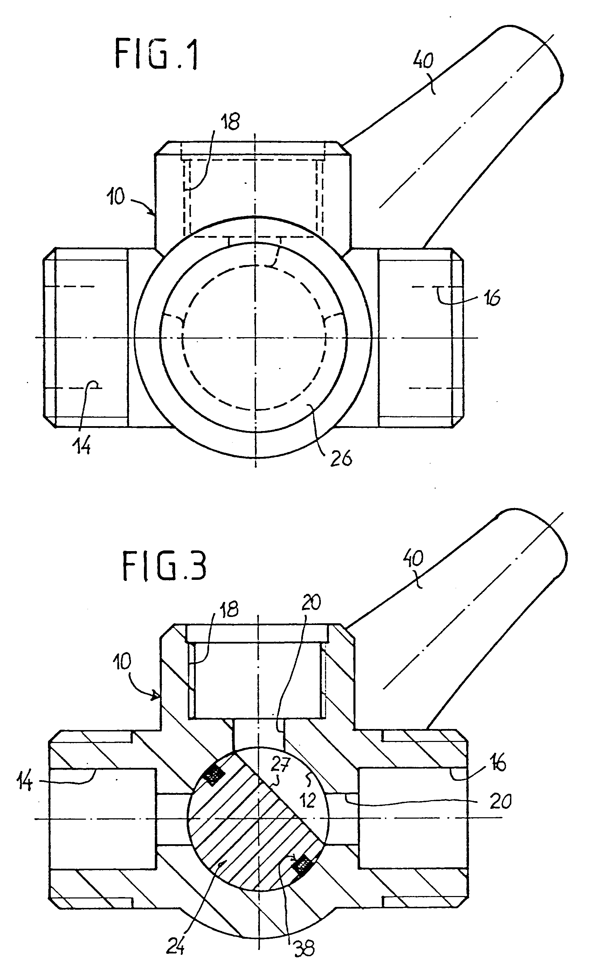

Fig.1 Eine Ansicht einer Umschaltweiche mit Betätigungshebel,
Fig.2 Eine axiale Schnittansicht durch die Umschaltweiche gem. Fig.1 und
Fig.3 Eine radiale Schnittansicht längs der Linie A-A der Fig.2

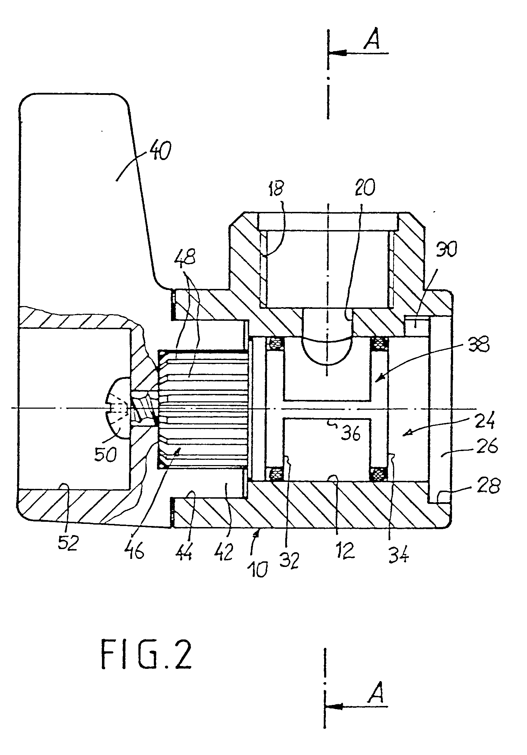

Ein Gehäuse 10 hat ein zylindrisches Durchgangsloch 12 an das sich zwei Auslaßöffnungen 14, 16 und eine Einlaßöffnung 18 jeweils über Radialkanäle 20 anschließen. Die drei Öffnungen 14, 16, 18 sind radial ausgerichtet, ihre jeweiligen Achsen schneiden einander in der Längsachse 22 des Gehäuses 10. Die beiden Auslaßöffnungen 14, 16 liegen einander diametral gegenüber, sind also gleichachsig angeordnet. Die Einlaßöffnung 18 erstreckt sich senkrecht dazu. Letztere hat ein Innengewinde, während den beiden Auslaßöffnungen 14, 16 Auslaßgewinde zugeordnet sind. In der zylindrischen Kammer 12 des Gehäuses 10 ist ein Ventilkolben 24 drehbar angeordnet, der überwiegend kreiszylindrisch konturiert ist, jedoch in dem Axialbereich der Bohrungen 20 eine Abflachung 27 aufweist, die sich etwa über einen Umfangswinkel von 150° erstreckt. Diese Abflachung 27 schafft einen kreissegmentförmigen Hohlraum, welcher in bestimmten Drehstellungen den Radialkanal der Einlaßöffnung 18 mit denjenigen einer der beiden Auslaßöffnungen 14, 16 verbindet. Der Ventilkolben 24 ist um 90° drehbar. Die beiden Drehendstellungen werden durch Anschläge definiert und zwar weist der Ventilkolben 24 an seinem in Fig. 2 rechts dargestellten Ende einen Ringflansch 26 auf, der in einem zylindrischen Ansatz 28 des Gehäuses 10 aufgenommen ist und an dem sich axial nach innen ein Vorsprung 30 erstreckt, der in eine Umfangsaussparung des Gehäuses 10 hineinreicht, deren Umfangswinkel gleich dem Soll-Drehwinkel des Ventilkolbens 24 zuzüglich der doppelten Breite des Vorsprunges 30 ist.

Der Ventilkolben 24 ist mit zwei im Axialabstand liegenden Ringnuten 32, 34 versehen, die den Axialbereich der Bohrungen 20 zwischen sich aufnehmen. Die beiden Ringnuten 32, 34 sind durch zwei Axialnuten 36 miteinander verbunden. In dieser Nutanordnung befindet sich eine Korbdichtung 38, die den Axialbereich der Radialkanäle 20 nach außen und zwischen zwei Umfangsbereichen abdichtet.

Der Ringkolben 24 ist mit einem Handhebel 40 drehfest, jedoch lösbar verbunden. Der Handhebel 40 weist einen Ringbund 42 auf, der in einem hohlzylindrischen Fortsatz 44 der Ringkammer 12 drehbar gelagert ist. In den Ringbund 42 greift ein Ansatz 46 des Ventilkolbens 24 ein, der koaxial zu diesen angeordnet ist und an seinem Umfang eine Anzahl in engen Abständen angeordneter Axialstege 48 aufweist. Der Innenumfang des Ringbundes 42 des Betätigungshebels 40 ist komplementär ausgebildet. der Betätigungshebel 40 kann also hinsichtlich seiner relativen Drehstellung zum Ventilkolben 24 feinstufig verstellt werden. Zu diesem Zweck ist es lediglich erforderlich, den Betätigungshebel 40 axial aus dem Gehäuse 10 herauszuziehen und in einer passenden neuen Drehstellung wieder einzuschieben. Die axiale Sicherung des Betätigungshebels 40 am Ventilkolben 24 wird mittels einer Schraube 50 erreicht, die ein zentrales Loch des Betätigungshebels 40 durchsetzt und in einem koaxialen Schraubloch des Ansatzes 46 eingeschraubt ist. Der Kopf der Schraube 50 befindet sich in einer Stirnausnehmung 52 des Betätigungshebels 40, die mittels einer Abdeckkappe verschlossen werden kann.

Soll die in den Figuren gezeigte Umschaltweiche an einem Gewindeauslaß an der Unterseite eines Auslaufhahnes festgeschraubt werden, so würde der Betätigungshebel 40 jedenfalls dann mit dem Auslauf kollidieren, wenn der Gewindeansatz nur kurz ist. Erfindungsgemäß läßt sich aber der Betätigungshebel 40 z.B. um 180° verdreht, am Ventilkolben 24 befestigen, sodaß er statt in der nach rechts oben dargestellten Stellung nach links unter zeigt. Der Schwenkbereich des Handhebels 40 befindet sich dann unterhalb des Gehäuses 10.

Gleiches gilt, wenn sich der Brausewasser-Anschlußstützen an der Oberseite der Mischarmatur befindet. Das Gehäuse 10 wird dann sozusagen überkopf eingebaut. Auch hier kann der sich dann abwärtserstreckende Betätigungshebel 40 mit der Armatur kollidieren, was durch Umstecken des Handbetätigungshebels 40 vermieden werden kann. Wegen der Feinstufigkeit der Axialverzahnung zwischen dem Ansatz 46 des Ventilkolbens 24 und dem Betätigungshebel 40 läßt sich die relative Drehstellung des Betätigungshebels 40 in den jeweils günstigsten Bereich legen, sodaß eine hohe Bedienungsfreundlichkeit erreicht wird.

## Patentansprüche

1. Umschaltweiche zum Anschluß an Wasserleitungen im Haushalts-und Pflegebereich, mit einem Gehäuse (10), in dem eine zylindrische Kammer (12) gebildet ist, an die zwei im Umfangsabstand angeordnete Auslaßöffnungen (14, 16) und eine, diesen Umfangsabstand wenigstens annähernd halbierende Einlaßöffnung (18) angeschlossen sind, wobei den Öffnungen (14-18) Schraubanschlüsse zugeordnet sind, und mit einem, in der Kammer (12) drehbar angeordneten Ventilkolben (24), der axial mit einem außerhalb des Gehäuses (10) angeordneten Betätigungshebel (40) drehfest verbunden ist und im Bereich der zylindrischen Kammer (12) über Querschnittsbereiche zylindrisch ausgebildet ist, **dadurch gekennzeichnet, daß** der Ventilkolben (24) mit dem Betätigungshebel (40) durch eine lösbare Steckverbindung (42, 46) gekuppelt ist, die mindestens zwei unterschiedliche Kupplungsstellungen aufweist.

2. Umschaltweiche nach Anspruch 1, **dadurch gekennzeichnet, daß** der Ventilkolben (24) einen koaxialen Ansatz (46) aufweist, dessen Kontur unrund ausgebildet ist und daß der Betätigungshebel (40) eine stirnseitige Ausnehmung aufweist, die den Ansatz (46) mit Schiebespiel unverdrehbar umgreift.

3. Umschaltweiche nach Anspruch 1 , **dadurch gekennzeichnet, daß** der Betätigungshebel (40) einen Ringbund (42) aufweist, der in einem, ggf. abgesetzten hohlzylindrischen Fortsatz (44) der zylindrischen Kammer 12 drehbar gelagert ist.

4. Umschlaltweiche Anspruch 1 , **dadurch gekennzeichnet, daß** einer der den Ventilkolben (24) und den Betätigungshebel (40) umfassenden Teile im Umfangsbereich eine Vielzahl, auf demselben Durchmesser liegender und in gleichen Abstand angeordneter Axialstege (48) aufweist und der jeweils andere Teil (40, 24) komplementär mit entsprechenden Axialnuten ausgebildet ist.

5. Umschaltweiche nach Anspruch 1 , **dadurch gekennzeichnet, daß** der Ventilkolben (24) einen Endflansch (26) aufweist, der in einen, an die zylindrische Kammer (12) angrenzenden zylindrischen Öffnungsabschnitt (28) größeren Durchmessers eingreift.

6. Umschaltweiche nach Anspruch 1 , **dadurch gekennzeichnet, daß** der Ventilkolben (24) und der Betätigungshebel (40) durch eine, von der einen Stirnseite her betätigbare axiale Schraube (50) miteinander verbunden sind, die ein koaxiales Loch des Ventilkörpers (24) oder des Betätigungshebels (40) durchsetzt und in ein damit fluchtendes Schraubloch des jeweils anderen dieser beiden Teile (24, 40) eingeschraubt ist.

7. Umschaltweiche nach Anspruch 1 , **dadurch gekennzeichnet, daß** der Ventilkörper (24) zwei parallele Ringnuten (32, 34) aufweist, die durch zwei Axialnuten (36) miteinander verbunden sind und daß in der Nutanordnung eine einstöckige Korbdichtung (38) gehaltert ist.

8. Umschaltweiche nach Anspruch 1 , **dadurch gekennzeichnet, daß** der Ventilkörper (24) nahe seinem einen Ende einen radialen Fortsatz (30) aufweist, der zur Drehwinkelbegrenzung in einer, sich nur über einen Teil des Umfangs erstreckenden Ringnut des Gehäuses (10) eingreift.
